# EUROPEAN PATENT APPLICATION

(11) **EP 1 413 963 A2**
(43) Date of publication of application: **28.04.2004**
(21) Application number: 03023904.0
(22) Date of filing: 21.10.2003
(51) Int. Cl.: G06F 17/30

(54) **Mobile communication system using mobile terminal to query, download, and manage parts of a schedule**

(30) Priority: 23.10.2002 JP 2002307735
(71) Applicant: NEC CORPORATION, Tokyo (JP)
(72) Inventor: Aoki, Yayoi, Minato-ku, Tokyo (JP)
(74) Representative: VOSSIUS & PARTNER

(57) **Abstract**

A mobile communication system using a mobile terminal (1) to query, download and store personal schedule data from a server (4). The data is retrieved in the server according to a query parameter of a previous event or a telephone number of a received call from the mobile terminal and transmitted to the mobile terminal, where it is stored.

## Description

The present invention relates to a mobile terminal managing schedule and a mobile communication system using the same.

With wide use of portable phones, new functions such as a web viewing function, a transmission and reception function of E-mails are added to a portable phone in addition to a communication function between the portable phones. Also, a schedule can be managed using the calendar function and a scheduler function.

However, the portable phone is difficult to store detailed schedules because of the limitation of a memory capacity mounted on the portable phone. For this reason, a method of registering the detailed schedules on a specific site on the Internet previously and manually by a user and viewing the specific site by using a web viewing function to confirm the schedules is proposed in JP-P2002-118677A.

In the above-mentioned conventional portable phone, there are a method of manually inputting date, time and theme and settings such as necessity or non-necessity of alarm notice, a method of automatically registering a received mail described in a specific form after confirmation by the user, and the above-mentioned method of viewing the specific site using the web reading function, as schedule registering methods at present. However, the data registration is carried out through the user operation and there is a problem that the user operation takes time.

In conjunction with the above description, an electronic scheduler system is disclosed in JP-P2001-52080A. The electronic scheduler system of this conventional example is composed of a telecommunication network, a communication equipment, a browser which operates on the communication equipment and at least one network which is chosen from the Internet, an intranet, and an extranet. The data produced by people other than a user is held as a pointer or link to a record of an event (schedule), an action plan or an action record of the user himself. A data obtained by synthesizing the data and the record can be displayed by the browser on the communication equipment.

Also, a mobile radio communication system is disclosed in JP-P2001-216223A.

The mobile radio communication system of this conventional example is composed of a mobile radio terminal which operates using terminal data stored in a first memory and a server apparatus which can communicate with the mobile radio terminal in a radio channel. The mobile radio terminal contains a first data transmission section for reading out the terminal data from the first memory section and transmitting to the server apparatus. A data comparing section calculates a first checksum from the terminal data stored in the first memory section, requests a second checksum of the terminal data stored in the server apparatus to the server apparatus and determines whether the first and second checksums are coincident with each other. When the judgment result by the data comparing section does not indicate the coincidence, a first data receiving section requests the transmission of the terminal data stored in the server apparatus to the server apparatus, receives the terminal data from the server apparatus, and updates the terminal data stored in the first memory section. The server apparatus contains a second memory section which stores the terminal data. A second data receiving section receives the terminal data from the mobile radio terminal and stores in the second memory section. A checksum transmission section calculates the second checksum of the terminal data stored in the second memory section in response to the request from the mobile radio terminal and transmits to the mobile radio terminal. A second data transmission section reads out the terminal data from the second memory section in accordance with the request from the mobile radio terminal and transmits to the mobile radio terminal.

Also, an automatic data delivery system using a radio mobile terminal is disclosed in JP-P2001-282672A.

In the data delivery system of this conventional example, a user of a radio mobile terminal registers request of automatic and periodic delivery of contents to a provider (WWW server) previously. A data service is carried out from a contents provider to the radio mobile terminal. The radio mobile terminal executes the JAVA program downloaded from a specific URL of the WWW server to automatically request the provision of the contents to the contents provider every time interval measured by a timer of the radio mobile terminal. The WWW server receives the request and transmits the contents requested by the radio mobile terminal to the radio mobile terminal by executing a WWW server program for providing the contents. In this reference, the contents transmitted from the provider are predetermined based on the JAVA program and the radio mobile terminal does no have a scheduler.

Also, a method of restricting originating call is disclosed in JP-P2002-232554A.

In restricting method of this conventional example, a call originating process which is accomplished by execution of an application program on a communication terminal is restricted. The restricting method is achieved by storing a telephone number of a communication node which is previously permitted as a call object in the call originating process, by comparing a telephone number of a communication node when the call originating process is executed and the stored telephone number, and by determining based on the comparing result whether the call originating process is valid.

Therefore, an object of the present invention is to provide a mobile terminal and a mobile communication system using the same, in which the latest schedule data can be always stored and managed in the user terminal.

In an aspect of the present invention, a mobile communication system includes a mobile terminal which executes a program; a base station which communicate with the mobile terminal in a radio channel; a network connected with the base station; and a server having a server storage unit which stores schedule data and connected with the network. The mobile terminal transmits a request with a parameter of an event selected previously or a telephone number corresponding to a received call to the server through the base station and the network based on the program. The server retrieves the schedule data corresponding to the parameter from the server storage unit and transmits the retrieved schedule data to the mobile terminal through the network and the base station. The mobile terminal stores the retrieved schedule data in a terminal storage unit based on the program.

Here, when the parameter is the event, and the mobile terminal includes a display and input section, the mobile terminal may execute the program to provide a first guidance for a user to select one of events previously. Also, when the mobile terminal further includes a timer, the mobile terminal may execute the program to provide a second guidance for the user to input a time interval, may start the timer to measure the time interval, and may transmit the request with the parameter of the selected event to the server for every time interval.

Also, when the parameter is the telephone number, and the server stores the schedule data in the server storage unit in relation with the telephone number, the mobile terminal may execute the program to provide a third guidance for the user to input a telephone number, and may hold the inputted telephone number. Also, when a call is received, the mobile terminal may execute the program to determine whether the telephone number corresponding to the call is coincident with the inputted telephone number, and to transmit the request with the parameter of the telephone number corresponding to the call to the server when it is determined that the telephone number corresponding to the call is coincident with the inputted telephone number. In this case, the mobile communication system may further include a computer connected with the network to upload a specific schedule data with a telephone number to the server. The server may store the specific schedule data uploaded from the computer through the network in the server storage unit in relation with the telephone number from the computer.

Also, the mobile terminal may further include a scheduler which manages a schedule. The mobile terminal may issue a request to the scheduler to register or update the schedule. The scheduler may analyze the schedule data stored in the terminal storage unit in response to the request and may read out the retrieved schedule data from the terminal storage unit based on the analyzing result and may hold as a new schedule while the program is executed.

Also, the program may be a Java(R) program, and the mobile terminal may execute another program to download the program from the server.

In another aspect of the present invention, a mobile terminal includes a radio section; a terminal storage unit; a display and input section; a control section which executes a first program; and a program executing section which executes a second program to instruct the control section to control the radio section to transmit a request with a parameter of an event selected previously or a telephone number corresponding to a received call to a server, and to store a schedule data provided from the server in the terminal storage unit when the schedule data is received by the radio section.

Here, when the parameter is the event, the program executing section may instruct the control section to control the display and input section to provide a first guidance for a user to select one of events previously. Also, the program executing section may instruct the control section to control the display and input section to provide a second guidance for the user to input a time interval. The program executing section may start a timer to measure the time interval, and may instruct the control section to control the radio section to transmit the request with the parameter of the selected event to the server for every time interval.

Also, when the parameter is the telephone number, and the server stores the schedule data in the server storage unit in relation with the telephone number, the program executing may instruct the control section to control the display and input section to provide a third guidance for the user to input a telephone number, and holds the inputted telephone number. When a call to the mobile phone is received by the radio section, the control section may inform a call reception to the program executing section together with a telephone number corresponding to the call. The program executing section may determine whether the telephone number corresponding to the call is coincident with the inputted telephone number, and may instruct the control section to control the radio section to transmit the request with the parameter of the telephone number corresponding to the call to the server when it is determined that the telephone number corresponding to the call is coincident with the inputted telephone number.

Also, the mobile terminal may further include a scheduler which manages a schedule, and the program executing section may issue a request to the scheduler to register or update the schedule. The scheduler may analyze the schedule data stored in the terminal storage unit in response to the request and may read out the retrieved schedule data from the terminal storage unit and may hold as a new schedule while the program executing section executes the second program.

In this case, the second program may be a Java(R) program, and the control section may control the radio section to download the second program from the server.

In another aspect of the present invention, a software product executable by a computer, includes a function to generate an instruction such that a request with a parameter of an event selected previously or a telephone number corresponding to a received call is transmitted to a server; and a function to store a schedule data provided from the server in a terminal storage unit when the schedule data is received.

Here, when the parameter is the event, the software product may include a function to generate an instruction such that a first guidance is provided for a user to select one of events previously. In addition, the software product may further include a function to generate an instruction a second guidance is provided for the user to input a time interval; a function to start a timer to measure the time interval; and a function to generate an instruction such that the request with the parameter of the selected event is transmitted to the server for every time interval.

Also, when the parameter is the telephone number, and the server stores the schedule data in the server storage unit in relation with the telephone number, the software product may include a function to generate an instruction such that a third guidance is provided for the user to input a telephone number; a function to hold the inputted telephone number; a function to determines whether a telephone number corresponding to the call is coincident with the inputted telephone number, when the call is received; and a function to generate an instruction such that the request with the parameter of the telephone number corresponding to the call is transmitted to the server when it is determined that the telephone number corresponding to the call is coincident with the inputted telephone number.

Also, the software product may further include a function to issue a request to the scheduler to register or update the schedule, when the schedule data is stored in the terminal storage unit. Hereinafter, a mobile communication system of the present invention will be described in detail with reference to the attached drawings.
Fig. 1 is a block diagram showing the structure of a mobile communication system according to an embodiment of the present invention;
Fig. 2 is a block diagram showing the structure of a mobile phone apparatus in the mobile communication system in the embodiment of the present invention;
Fig. 3 is a block diagram showing the structure of a WWW server in the mobile communication system in the embodiment of the present invention;
Fig. 4 is a flow chart showing a process operation by the WWW server in the mobile communication system of the embodiment;
Fig. 5 is a sequence diagram showing the process when the mobile terminal in the embodiment downloads the JAVA(R) program from the WWW server;
Fig. 6 is a flow chart showing an initial setting process of the JAVA(R) program in the mobile terminal;
Figs. 7 to 9 are a flow chart showing a reception process in the mobile terminal of the embodiment; and
Fig. 10 is a sequence diagram showing the reception process of schedule data from the WWW server by the mobile terminal.

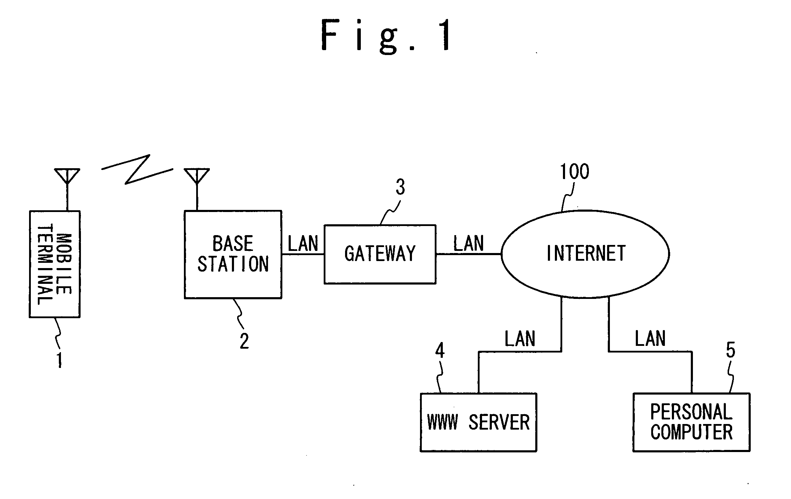

Fig. 1 is a block diagram showing the structure of a mobile communication system according to an embodiment of the present invention. In Fig. 1, the mobile communication system according to the embodiment of the present invention is composed of a mobile terminal 1, a base station 2, a gateway 3, a WWW (World Wide Web) server 4 which provides a schedule data, and a personal computer 5 which uploads the schedule data to the WWW server 4. The gateway 3, the WWW server 4 and the personal computer 5 are connected with the Internet 100. In this case, the mobile terminal 1 is accessible to the WWW server 4 through base station 2, the gateway 3 and the Internet 100.

The base station 2 transfers radio data sent from the mobile terminal 1 to the gateway 3 through a LAN (Local Area Network). The gateway 3 carries out to the data sent from the base station 2, a protocol conversion from a protocol for the radio communication to TCP/IP (Transmission Control Protocol/Internet Protocol), and sends to the WWW server 4 of a contents provider through the Internet 100.

The personal computer 5 carries out a PUSH type of data transmission to upload the schedule data to the WWW server 4 through the Internet 100 and to call the mobile terminal 1.

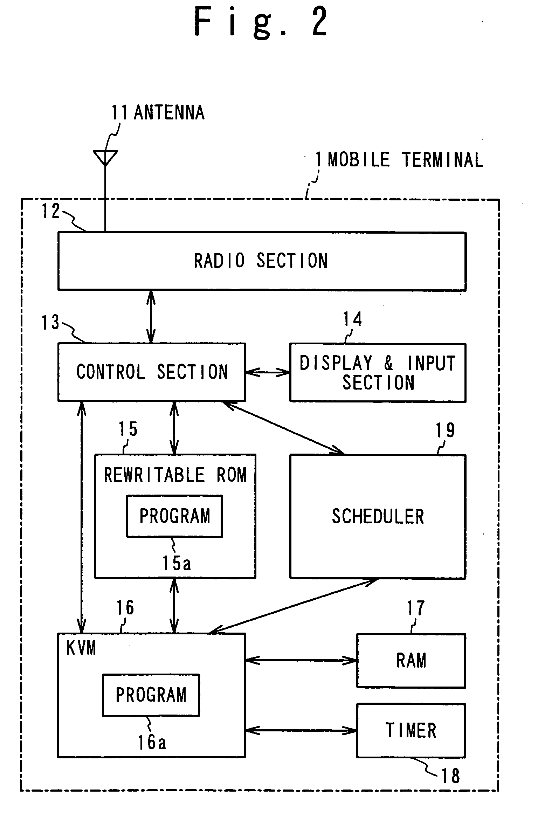

Fig. 2 is a block diagram showing the structure of the mobile terminal 1 shown in Fig. 1. As shown in Fig. 2, the mobile terminal 1 is composed of an antenna 11, a radio section 12, a control unit 13, a rewritable ROM (Read Only Memory) 15, a display section 14, an environment KVM (K Virtual Machine) [JAVA(R) virtual machine] 16, a RAM (Random access Memory) 17, a timer 18 and a scheduler 19.

The radio section 12 exchanges data with the base station 2, and the control unit 13 executes a program 15a stored in the ROM 15 to output instructions and data to various sections. The display section 14 displays letters and graphics on a screen (not shown).

The rewritable ROM 15 stores the program 15a downloaded. The environment KVM 16 executes the JAVA(R) program 16a. The RAM 17 stores data received from the WWW server 4 of a contents provider through the execution of the JAVA(R) program 16a. The timer 18 measures a data acquisition time interval and the scheduler 19 manages a schedule.

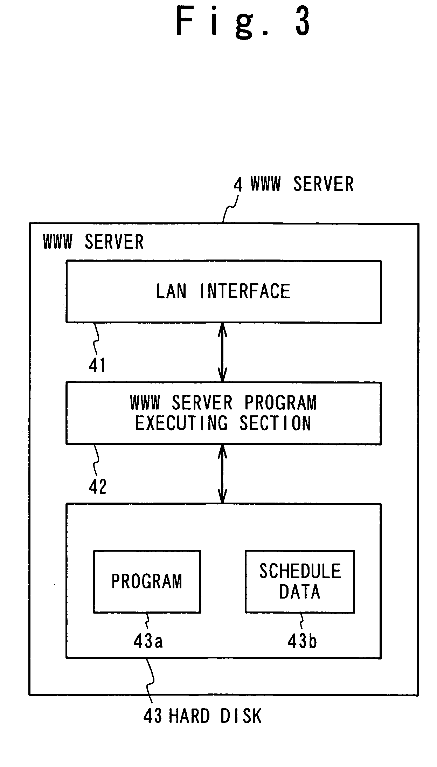

Fig. 3 is a block diagram showing the structure of the WWW server 4 shown in Fig. 1. In Fig. 3, the WWW server 4 is composed of a LAN interface 41 for transferring data through the LAN, a WWW server program 42 for providing a contents program and a hard disk 43 for storing the JAVA(R) program 43a to be delivered and schedule data 43b.

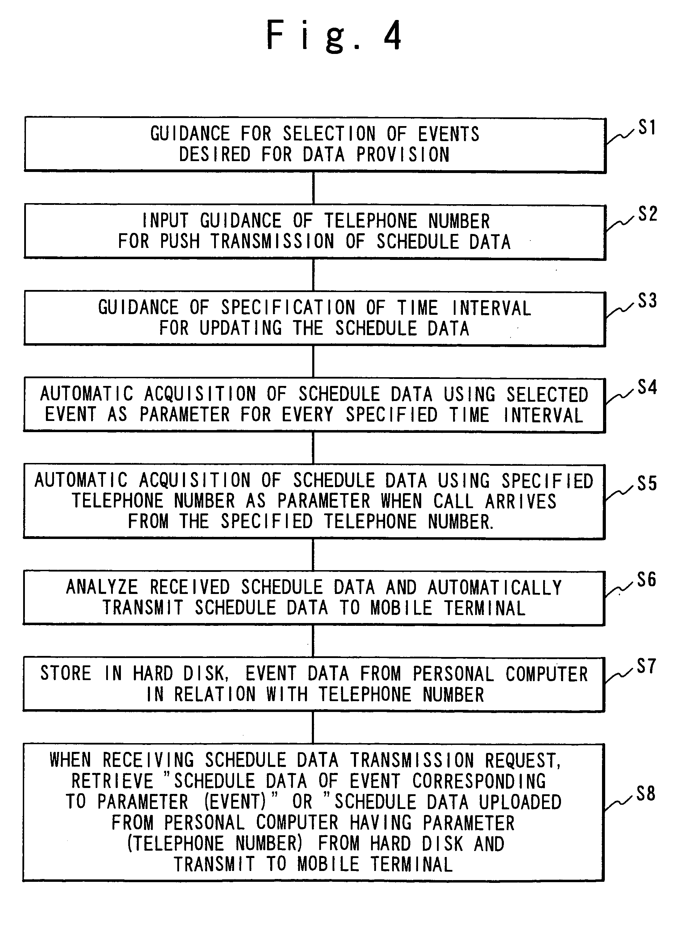

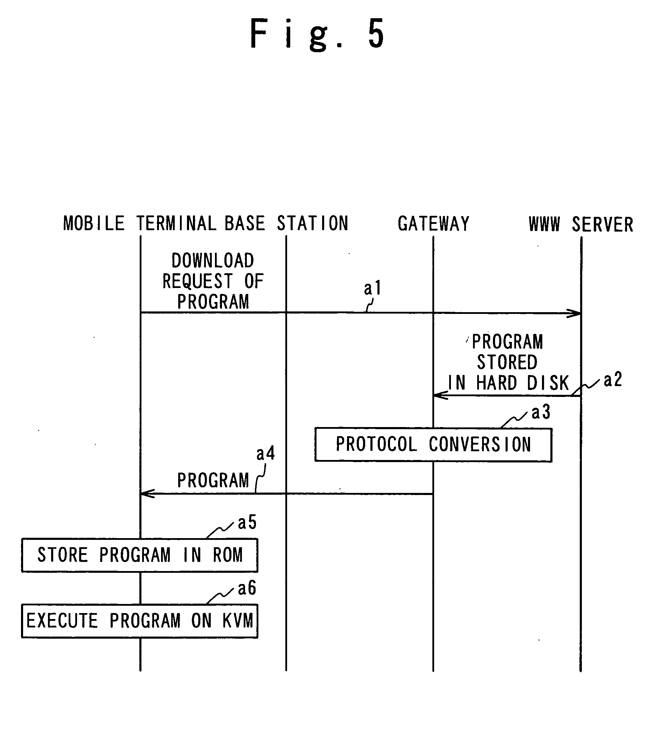

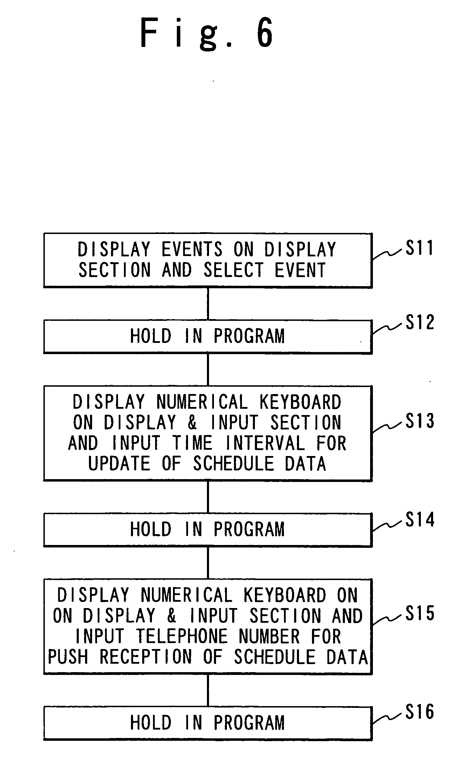

Fig. 4 is a flow chart showing an operation process by the WWW server 4 shown in Fig. 1. Fig. 5 is a sequence diagram showing a process when the mobile terminal 1 shown in Fig. 1 downloads the JAVA(R) program from the WWW server 4. Fig. 6 is a flow chart showing an initial setting process of the JAVA(R) program 16a in the mobile terminal 1 shown in Fig. 1.

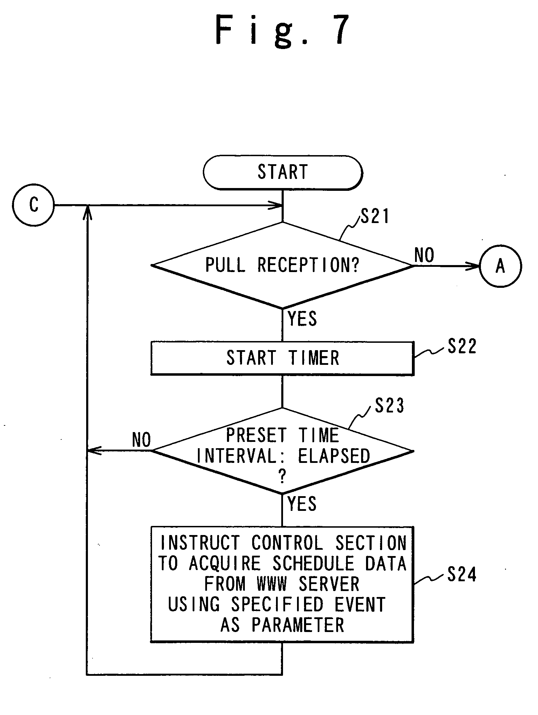

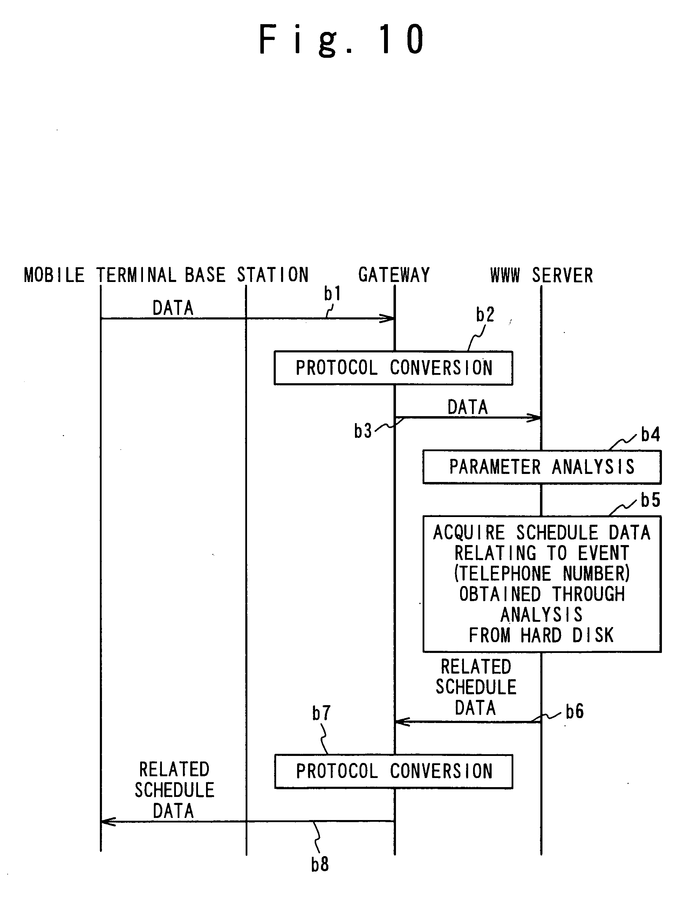

Also, Figs. 7 to 9 are flow charts showing a reception process of the schedule data by the mobile terminal 1 shown in Fig. 1. Fig. 10 is a sequence diagram showing the reception process of the schedule data from the WWW server 4 by the mobile terminal 1 shown in Fig. 1.

Next, the operation of the mobile communication system will be described with reference to Figs. 1 to 10.

First, the function of the WWW server 4 will be described. The WWW server 4 executes the JAVA(R) program 43a with the following functions in the hard disk 43 previously.

The WWW server 4 has a function (step S1 shown in Fig. 4) to provide a guidance to a user to select one or more of events that the user wants data provision service (e.g., a firework schedule, concert schedules and so on), and a function (step S2 shown in Fig. 4) to provide a guidance to the user to input a telephone number that the PUSH transmission of the schedule data is permitted. Also, the WWW server 4 has a function (step S3 shown in Fig. 4) to provide a guidance to the user to specify a time interval that the user wants the updating of the schedule data, and a function (step S4 shown in Fig. 4) to automatically acquire the schedule data from the WWW server 4 by using the even selected by the user as a parameter every time interval specified in the above function. Also, the WWW server 4 has a function (step S5 shown in Fig. 4) to automatically acquire the schedule data from the WWW server 4 by using the above-mentioned telephone number as a parameter when a call is received from the telephone number, and a function (step S6 shown in Fig. 4) to automatically analyze the received schedule data and to register the schedule data on the scheduler 19 of the mobile terminal 1. The WWW server 4 has the schedule data of several kinds of events in the hard disk 43. At this time, each event is previously related with the schedule data (step S7 shown in Fig. 4). Also, the schedule data is always updated. Moreover, the WWW server 4 has a function to upload event data from the personal computer 5 into the hard disk 43 through the Internet 100. In this case, the telephone number of a modem of the personal computer 5 is related with the event data.

When the JAVA(R) program 16a downloaded in the mobile terminal 1 is executed by the environment KVM 16 and the WWW server 4 receives a schedule data transmission request with a parameter (an event or a telephone number), the WWW server 4 retrieves "the schedule data of the event corresponding to the parameter (the event)" or "the schedule data with the parameter (the telephone number) uploaded from the personal computer" from the hard disk 43, and transmits it to the mobile terminal 1 (step S8 shown in Fig. 4).

Next, a process when the mobile terminal 1 downloads the JAVA(R) program 43a from the WWW server 4 will be described. The user requests the download of the JAVA(R) program 43a through a Web browser (not shown) on the mobile terminal 1 (see a1 shown in Fig. 5). At this time, a WWW server program 42 in the WWW server 4 is executed and the WWW server 4 transmits the JAVA(R) program stored in the hard disk 43 to the mobile terminal 1 through a LAN interface 41 (see a2 shown in Fig. 5). In this case, by writing the program stored in the WWW server 4 in JAVA(R), it is possible to execute the program loaded through the network in the mobile terminal 1.

The JAVA(R) program is transmitted through the Internet 100 from the LAN interface 41 of the WWW server 4, and the gateway 3 carries out a protocol conversion to the JAVA(R) program (see a3 shown in Fig. 5) and transmits to the radio section 12 of the mobile terminal 1 through the base station 2 (see a4 shown in Fig. 5).

When it is detected that the program received by the radio section 12 is a JAVA(R) program, the control unit 13 of the mobile terminal 1 stores the JAVA(R) program in the ROM 15 (see a5 shown in Fig. 5) and controls the environment KVM 16 to execute it (see a6 shown in Fig. 5).

Next, the operation of the environment KVM 16 executing the JAVA(R) program will be described. First, the initial setting of the JAVA(R) program will be described. The environment KVM 16 executing the JAVA(R) program 16a instructs the control section 13 to control the display section 14 to display a guidance such that the event (e.g., a firework schedule, a concert schedule and so on) are displayed and such that the user selects one of the events (step S11 shown in Fig. 6). This guidance is held in the JAVA(R) program 16a (step S12 shown in Fig. 6).

Next, the environment KVM 16 instructs the control section 13 to control the display section 14 to display a guidance such that a numerals input screen is displayed and such that the user inputs a time interval of the updating of the schedule data (step S13 shown in Fig. 6). This guidance is held in the JAVA(R) program 16a (step S14 shown in Fig. 6).

Moreover, the environment KVM 16 instructs the control section 13 to control the display section 14 to display a guidance such that a numerals input screen is displayed on the screen and such that the user inputs a telephone number for the PUSH reception of the schedule data (step S15 shown in Fig. 6). This guidance is held in the JAVA(R) program 16a (step S16 shown in Fig. 6).

In case of the PULL reception (step S21 shown in Fig. 7), the environment KVM 16 in the mobile terminal 1 instructs a timer 18 to start (step S22 shown in Fig. 7) and to measure the predetermined time interval (Fig. 7 step S23) as specified above. When it is informed that the predetermined time interval elapsed, the environment KVM 16 issues an instruction to the control unit 13. The instruction contains the content that the schedule data should be acquired from the WWW server 4 by using the event data specified in the above-mentioned event selection as a parameter (Step S24 of the Fig. 7).

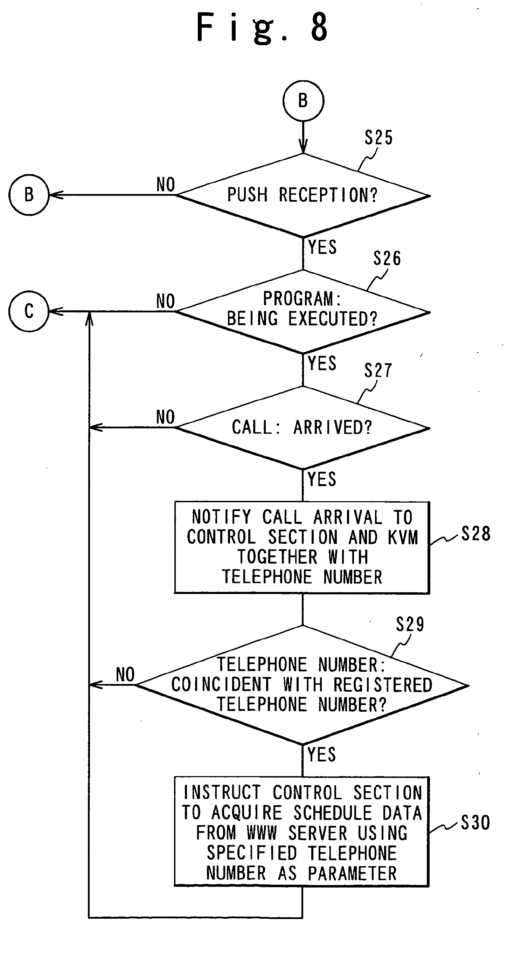

Also, in case of the PUSH reception (step S25 shown in Fig. 8), when the radio section 13 receives a call (step S27 shown in Fig. 8) while the environment KVM 16 executes the JAVA(R) program 16a (step S26 shown in Fig. 8), the reception of the call is notified to the environment KVM 16 through the control unit 13 together with a telephone number of a call originator (step S28 shown in Fig. 8)). When receiving the call reception notice, the environment KVM 16 determines whether the telephone number of the call originator is coincident with the telephone number previously registered to permit the above-mentioned PUSH reception (step S29 shown in Fig. 8). When the telephone number of the call originator is coincident with the registered telephone number, the environment KVM 16 issues an instruction to the control unit 13. The instruction contains the content that the schedule data should be acquired from the WWW server 4 by using the telephone number as a parameter (step S30 shown in Fig. 8).

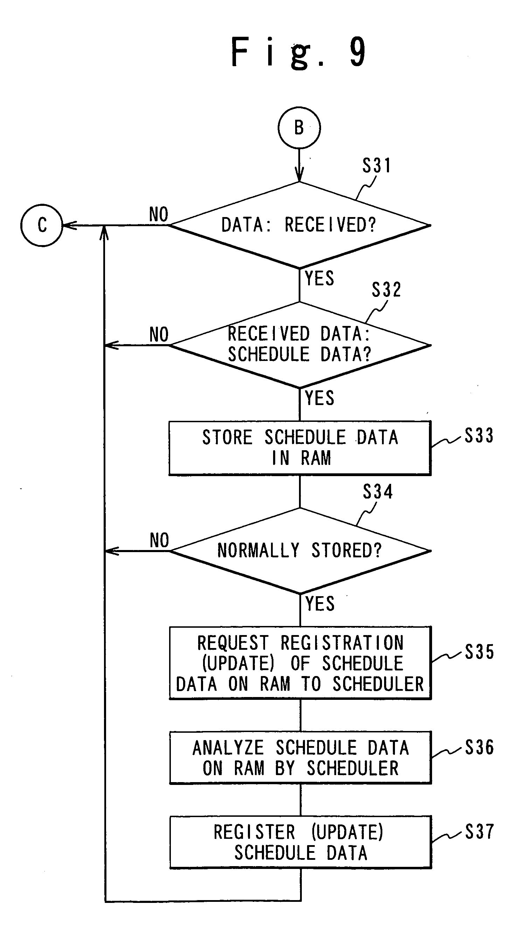

In case of data reception in the mobile terminal 1 (step S31 shown in Fig. 9), the control unit 13 receives the above-mentioned instruction and transmits a request from the radio section 12 through the base station 2 (see b1 shown in Fig. 10). The request is subjected to the protocol conversion in the gateway 3 (see b2 shown in Fig. 10), and transmitted to the WWW server 4 that provides the schedule data, through the Internet 100 (see b3 shown in Fig. 10).

In the WWW server 4, the request received by the LAN interface 41 is notified to the WWW server program executing section 42. When receiving the notice, the WWW server program executing section 42 analyzes the parameter contained in the request and identifies the event or telephone number as the parameter (see b4 shown in Fig. 10). The WWW server program 42 retrieves the schedule data 43b related with the event (the telephone number) obtained through the analysis from the hard disk 43 (see b5 shown in Fig. 10) and transmits it to the mobile terminal 1 from the LAN interface 41.

The schedule data 43 is transmitted from the LAN interface 41 through the Internet 100 (see b6 shown in Fig. 10), is subjected to the protocol conversion in the gateway 3 (see b7 shown in Fig. 10), and then is transmitted to the radio section 12 of the mobile terminal 1 through the base station 2 (see b8 shown in Fig. 10). When it is detected that the schedule data is received by the radio section 12 (step S32 shown in Fig. 9), the control unit 13 of the mobile terminal 1 transmits the schedule data to the environment KVM 16. The environment KVM 16 stores the schedule data in the RAM 17 (step S33 shown in Fig. 9). The environment KVM 16 may previously issue an instruction to the control unit 13 such that the schedule data is automatically written in the RAM 17, if the received data is the schedule data.

In case of the registration of a schedule in the mobile terminal 1, when confirming that the schedule data is correctly stored in the RAM 17 (step S34 shown in Fig. 9), the environment KVM 16 instructs the scheduler 19 to carry out the registration or updating of the schedule data in the RAM 17 (step S35 shown in Fig. 9). When receiving the instruction, the scheduler 19 analyzes the schedule data stored in the RAM 17 (step S36 shown in Fig. 9) and carries out the schedule registration or the updating (step S37 shown in Fig. 9).

By repeating the above process operation, the schedule data registered on the scheduler 19 in the mobile terminal 1 is updated to the latest data.

In this way, in this embodiment, the mobile terminal 1 acquires the schedule data of a desired event automatically from to the WWW server 4, and the schedule data is registered on the scheduler 19 in the mobile terminal 1. Therefore, the user operations such as an operation of "finding the event data", an operation of "manually registering the schedule data", an operation of "detecting the update of the schedule data by himself", and an operation of "manual correcting the updated schedule data" can be omitted. Also, the latest schedule data can be always managed.

Also, in this embodiment, the mobile terminal 1 acquires the schedule data in response to the reception of a call from the specified telephone number, and the acquired schedule data is registered on the scheduler 19 in the mobile terminal 1. Therefore, the schedule data registered on the WWW server 4 by specific persons such as friends and the user himself can be automatically registered on the scheduler 19 and be updated. Thus, the PUSH type reception and registration of the schedule data can be realized, while it was conventionally impossible.

As described above, the mobile terminal of the present invention has the scheduler for managing a previously set schedule, and is accessible to the contents server through the Internet. The mobile terminal requests the provision of the schedule data to the contents provider every predetermined time interval, and the schedule data downloaded from the contents provider is registered on the scheduler and used for updating. Therefore, the latest schedule data can be always stored in the user terminal and managed.

Also, another mobile terminal of the present invention has the scheduler for managing a previously set schedule, and is accessible to the contents server through the Internet. The mobile terminal requests the provision of the schedule data to the contents provider in response to the reception of a call from a telephone number which is previously registered in the mobile terminal, and the schedule data downloaded from the contents provider is registered on the scheduler and used for updating. Therefore, the latest schedule data can be always stored in user terminal and managed.

## Claims

1. A mobile communication system comprising:
a mobile terminal (1) which executes a program;
a base station which communicate with said mobile terminal in a radio channel (2);
a network (100) connected with said base station; and
a server (4) having a server storage unit (43) which stores schedule data and connected with said network,
wherein said mobile terminal transmits a request with a parameter of an event selected previously or a telephone number corresponding to a received call to said server through said base station and said network based on said program,
said server retrieves said schedule data corresponding to said parameter from said server storage unit and transmits the retrieved schedule data to said mobile terminal through said network and said base station, and
said mobile terminal stores the retrieved schedule data in a terminal storage unit based on said program.

2. The mobile communication system according to claim 1, wherein said parameter is the event,
said mobile terminal comprises a display and input section,
said mobile terminal executes said program to provide a first guidance for a user to select one of events previously.

3. The mobile communication system according to 2, wherein said mobile terminal further comprises a timer,
said mobile terminal executes said program to provide a second guidance for the user to input a time interval,
said mobile terminal starts said timer to measure said time interval, and transmits said request with said parameter of the selected event to said server for every time interval.

4. The mobile communication system according to any of claims 1 to 3, wherein said parameter is the telephone number, and said server stores said schedule data in said server storage unit in relation with the telephone number,
said mobile terminal executes said program to provide a third guidance for the user to input a telephone number, and holds the inputted telephone number,
When a call is received, said mobile terminal executes said program to determine whether the telephone number corresponding to the call is coincident with the inputted telephone number, and to transmit said request with said parameter of the telephone number corresponding to the call to said server when it is determined that the telephone number corresponding to the call is coincident with the inputted telephone number.

5. The mobile communication system according to claim 4, further comprising a computer connected with said network to upload a specific schedule data with a telephone number to said server,
wherein said server stores the specific schedule data uploaded from said computer through said network in said server storage unit in relation with the telephone number from said computer.

6. The mobile communication system according to any of claims 1 to 5, wherein said mobile terminal further comprises a scheduler which manages a schedule,
said mobile terminal issues a request to said scheduler to register or update said schedule,
said scheduler analyzes the schedule held in said scheduler in response to the request and reads out the retrieved schedule data from said terminal storage unit and holds as a new schedule while said program is executed.

7. The mobile communication system according to any of claims 1 to 6, wherein said program is a Java(R) program.

8. The mobile communication system according to any of claims 1 to 7, wherein said mobile terminal executes another program to download said program from said server.

9. A mobile terminal used in the mobile communication system according to any of claims 1 to 8.

10. A server used in the mobile communication system according to any of claims 1 to 8.

11. A software product executable by a computer and comprising:
a function to generate an instruction such that a request with a parameter of an event selected previously or a telephone number corresponding to a received call is transmitted to a server; and
a function to store a schedule data provided from said server in a terminal storage unit when said schedule data is received.

12. The software product according to claim 11, wherein said parameter is the event,
said software product comprises:
a function to generate an instruction such that a first guidance is provided for a user to select one of events previously.

13. The software product according to claim 12, further comprising:
a function to generate an instruction a second guidance is provided for the user to input a time interval;
a function to start a timer to measure said time interval; and
a function to generate an instruction such that said request with said parameter of the selected event is transmitted to said server for every time interval.

14. The software product according to any of claims 11 to 13, wherein said parameter is the telephone number, and said server stores said schedule data in said server storage unit in relation with the telephone number,
said software product comprises:
a function to generate an instruction such that a third guidance is provided for the user to input a telephone number;
a function to hold the inputted telephone number;
a function to determines whether a telephone number corresponding to the call is coincident with the inputted telephone number, when the call is received; and
a function to generate an instruction such that said request with said parameter of the telephone number corresponding to the call is transmitted to said server when it is determined that the telephone number corresponding to the call is coincident with the inputted telephone number.

15. The software product according to any of claims 11 to 14, further comprising:
a function to issue a request to a scheduler to register or update said schedule, when said schedule data is stored in the said terminal storage unit.
